# DEMANDE DE BREVET EUROPEEN

(11) **EP 4 498 269 A1**
(43) Date de publication de la demande: **29.01.2025**
(21) Numéro de dépôt: 24176846.4
(22) Date de dépôt: 20.05.2024
(51) Int. Cl.: G06F 21/36, H04L 9/08, H04L 9/32, H04W 12/63, H04W 12/77, G06Q 30/0601, G06Q 50/26, H04W 4/02

(54) **PROCÉDÉ ET APPAREIL MOBILE DE RENDU DE CODE, PROCÉDÉ ET SYSTÈME D'AUTHENTIFICATION DE CERTIFICAT NUMÉRIQUE**

(30) Priorité: 28.07.2023 FR 2308229
(71) Demandeur: IDEMIA Identity & Security France, 92400 Courbevoie (FR)
(72) Inventeur: MARTIN, Brian K., 92400 Courbevoie (FR); WISE, Matthew, 92400 Courbevoie (FR); WIEDIGER, Harold, 92400 Courbevoie (FR)
(74) Mandataire: Idemia

(57) **Abrégé**

L'invention concerne un procédé de rendu d'un code. Le procédé est mis en oeuvre par un premier appareil mobile et comprend : l'obtention (S201) d'un certificat numérique ; l'obtention (S202) d'informations représentant un temps et/ou une localisation ; l'obtention (S203) d'un code généré à l'aide d'un modèle de génération de code sur la base des informations représentant le temps et/ou la localisation ; et l'affichage (S204) du code en association avec au moins un élément qui est contenu dans le certificat numérique sur un dispositif d'affichage du premier appareil mobile.

## Description

### DOMAINE TECHNIQUE

La présente invention concerne de manière générale le domaine de l'authentification et plus particulièrement, un procédé et un appareil mobile de rendu (« rendered » en anglais) d'un code utilisé pour authentifier une personne, et un procédé et un système d'authentification d'un certificat numérique.

### CONTEXTE DE L'INVENTION

Certains scénarios se produisant quotidiennement nécessitent la vérification de certificats. À titre d'exemple, les vendeurs d'alcool vérifient les documents d'identité (ci-après "ID") de certains clients achetant des boissons alcoolisées afin de s'assurer qu'ils sont en âge de boire légalement ; les pharmacies exigent une prescription médicale avant de vendre des médicaments sur ordonnance, etc. Par ailleurs, des certificats numériques sont largement acceptés aujourd'hui (comme par exemple un permis de conduire numérique). Toutefois, il peut être facile de contrefaire ou falsifier des certificats numériques qui ne sont vérifiés que visuellement, cela rendant difficile pour le vérificateur de distinguer les certificats authentiques de certificats frauduleux.

Le brevet américain No. US 10 331 291B1 propose une solution simple et efficace au problème ci-dessus, selon laquelle un sous-ensemble d'indicateurs visuels prédéterminés sont sélectionnés et affichés sur une identification numérique conformément à un modèle prédéfini pour permettre la vérification de l'identité numérique sans aucun dispositif de détection supplémentaire.

Néanmoins, des solutions encore plus sécurisées restent nécessaires.

### RÉSUMÉ

Selon un premier aspect, la présente invention fournit un procédé de rendu d'un code. Le procédé est mis en oeuvre par un premier appareil mobile. Le procédé comprend :
l'obtention d'un certificat numérique comprenant au moins un élément ;
l'obtention d'informations représentant un temps et/ou une localisation ;
l'obtention d'un code généré à l'aide d'un modèle de génération de code sur la base des informations représentant le temps et/ou la localisation ; et
l'affichage du code en association avec l'au moins un élément qui est contenu dans le certificat numérique sur un dispositif d'affichage du premier appareil mobile, le modèle de génération de code étant un modèle génératif profond dont l'entropie est inférieure à un seuil donné, et le code étant un code graphique affiché comme arrière-plan du certificat numérique.

En particulier, le certificat numérique peut être un document d'identification numérique.

Le code est un code graphique, qui est une représentation visuelle présentant des informations graphiques ou sous forme d'images. Des exemples de code graphique comprennent un modèle en trois dimensions ("3D") ou un nuage de points, une image de synthèse, etc. En variante, le code peut être un texte ou des données numériques.

L'"au moins un élément" peut être des informations/données requises pour authentifier le certificat numérique. L'au moins un élément peut comprendre une partie du certificat numérique contenant les données requises ou ne contenir que les données requises. À titre d'exemple, l'au moins un élément peut être sélectionné dans un groupe comprenant une photographie faciale, le nom complet, le numéro de permis de conduire du conducteur et la date de naissance du titulaire du certificat numérique, la date d'émission du certificat numérique, la date d'expiration du certificat numérique, etc.

En outre, tel qu'il est utilisé ici, le terme de "modèle de génération de code" désigne un modèle génératif qui est un algorithme, une fonction ou un réseau neuronal conçu pour générer un code sur la base d'informations représentant un temps et/ou une localisation.

Contrairement aux solutions de l'art antérieur, le procédé mentionné ci-dessus propose de générer un code à l'aide d'un modèle de génération de code sur la base d'informations représentant un temps et/ou une localisation spécifique et d'afficher le code en association avec au moins un élément contenu dans un certificat numérique. L'apparence/le contenu du code pourrait ainsi être imprévisible, car il n'existe pas de liste de motifs qui peuvent être appris ou observés pour une utilisation future, et des modifications des informations représentant le temps et/ou la localisation seront répercutées dans le code. Par conséquent, l'utilisation du code pour vérifier le certificat numérique pourrait être simple, efficace et plus sûre que selon l'art antérieur.

En particulier, le modèle de génération de code peut être configuré pour générer le même code sur la base d'informations données représentant un temps et/ou une localisation. En d'autres termes, le modèle fournira en sortie un code identique si les mêmes informations lui sont fournies.

À titre d'exemple, le modèle est configuré pour générer systématiquement le même code sur la base d'informations représentant le même temps ou représentant le même temps et la même localisation, indépendamment de l'identité de l'utilisateur et notamment indépendamment de données personnelles d'identification de l'utilisateur présentes dans son certificat numérique, ce qui permet la vérification aisée du code par le vérificateur par comparaison du code avec celui généré sur son propre appareil mobile.

En outre, le modèle de génération de code peut être configuré pour générer différents codes sur la base d'informations différentes représentant chacune un temps ou une localisation différente.

En particulier, si un modèle génératif profond est utilisé et si les informations représentant le temps et/ou la localisation sont fournies en entrée au modèle pour générer le code, divers procédés peuvent être utilisés pour augmenter la sensibilité du modèle à des modifications des entrées.

Des exemples de procédés comprennent la sélection d'un modèle génératif profond qui peut être rendu très sensible à des modifications des entrées, tel qu'un réseau antagoniste génératif (ci-après "GAN") ou un auto-encodeur variationnel (ci-après "VAE"). Et/ou une fonction de perte qui favorise la diversité des codes générés peut être utilisée pour l'apprentissage du modèle génératif profond. Et/ou des informations non chiffrées qui représentent un temps et/ou une localisation peuvent être transformées à l'aide d'une technique cryptographique telle qu'un algorithme de hachage, selon laquelle les informations transformées (également désignées "informations chiffrées" dans le présent document) ou à la fois les informations non chiffrées et les informations transformées, peuvent être utilisées en tant qu'entrée du modèle. À titre d'exemple, la valeur de hachage variera de manière spectaculaire lors de modifications même minimes des informations non chiffrées.

Dans un exemple particulier, le premier appareil mobile obtient des informations représentant un temps et une localisation, lesquelles comprennent une valeur de hachage qui est produite en transformant des informations non chiffrées représentant le temps et la localisation (les informations non chiffrées peuvent par exemple correspondre au produit d'informations non chiffrées représentant le temps et d'informations non chiffrées représentant la localisation) à l'aide d'un algorithme de hachage. Le premier appareil mobile obtient ensuite un code généré à l'aide du modèle de génération de code sur la base des informations obtenues.

Dans une mise en oeuvre typique, un utilisateur chargé d'authentifier le certificat numérique se trouvera au même emplacement que l'appareil mobile, sensiblement au même moment. En mettant en oeuvre le même procédé sur un autre appareil mobile associé à l'utilisateur chargé de l'authentification, le procédé permet de vérifier rapidement que le code est identique sur les deux dispositifs, ce qui signifie que le code a bien été généré par le modèle de génération de code à l'aide des bonnes entrées.

En ce sens, le procédé peut être utilisé pour authentifier le certificat numérique.

Ceci est particulièrement avantageux car il est possible d'effectuer une authentification sans utiliser de lecteur ou de dispositif spécifique.

La génération du code peut être effectuée par l'appareil mobile ou par un serveur distant.

Selon un mode de réalisation particulier, la génération du code comprend une étape de fourniture en entrée des informations représentant le temps et/ou la localisation au modèle de génération de code. Cela rend le processus de génération simple et efficace.

Selon un autre mode de réalisation particulier, la génération du code comprend le paramétrage du modèle de génération de code à l'aide des informations représentant le temps et/ou la localisation. Cela rend le processus de génération pratique pour des modèles de types divers.

Dans un exemple particulier, la génération du code comprend une étape de fourniture en entrée des informations représentant l'un du temps et de la localisation au modèle et une étape de paramétrage du modèle à l'aide des informations représentant un autre du temps et de la localisation. Cela permet d'augmenter la diversité des codes de sortie.

Selon un autre mode de réalisation particulier, le modèle de génération de code est un modèle génératif profond, tel qu'un modèle comprenant un GAN, un modèle de diffusion, un VAE, un réseau neuronal convolutionnel à pixels (ci-après "CNN") et/ou un modèle de langage à base de transformateur. L'utilisation d'un modèle génératif profond est particulièrement sûre car il est pratiquement impossible, sans accès au modèle, de prédire la sortie en fonction du temps/de la localisation. La sortie de ces modèles peut en fait être considérée comme étant pratiquement aléatoire.

Selon encore un autre mode de réalisation particulier, le procédé comprend en outre, avant l'obtention des informations représentant le temps et/ou la localisation, une étape de réception d'une entrée utilisateur (« user input » en anglais) pour effectuer le rendu d'un code. À titre d'exemple, l'entrée utilisateur peut déclencher l'étape d'obtention des informations représentant le temps et/ou la localisation.

De plus, si le premier appareil mobile est configuré pour obtenir les informations représentant le temps, alors le temps peut être un instant associé à l'entrée utilisateur, une période comprenant l'instant associé à l'entrée utilisateur, ou un instant de référence au cours de la période.

En particulier, l'instant associé à l'entrée utilisateur peut être un moment où une opération est effectuée par le premier appareil mobile en réponse à l'entrée utilisateur. À titre d'exemple, l'instant associé à l'entrée utilisateur peut être : l'instant où l'entrée utilisateur est détectée par le premier appareil mobile, l'instant où le modèle de génération de code commence à générer le code en réponse à l'entrée utilisateur, etc.

La période peut être une fenêtre temporelle prédéfinie. L'instant de référence peut être le temps de début, un point médian, le temps de fin, ou tout autre instant spécifié au cours de la période. Cela permet de faire en sorte que le code soit stable dans le temps, facilitant ainsi la vérification du code. La durée de la fenêtre temporelle peut être sélectionnée en fonction du niveau de sécurité attendu. À titre d'exemple, la taille de la fenêtre temporelle peut être de 5 minutes. Cela permet un formatage spécial du temps (avant toute éventuelle transformation à l'aide d'une technique cryptographique) sur la base duquel le code est généré.

Et/ou, si le premier appareil mobile est configuré pour obtenir les informations représentant le lieu, alors la localisation peut être : une localisation estimée associée à l'entrée utilisateur, une zone prédéfinie comprenant la localisation estimée, ou une localisation de référence dans la zone prédéfinie.

La localisation estimée associée à l'entrée utilisateur peut être une localisation où se trouve le premier appareil mobile lorsque l'entrée utilisateur est détectée. La localisation peut être déterminée par un capteur du système global de positionnement (ci-après "GPS"), par des informations identifiant une balise Bluetooth ou une station de base proche du premier appareil mobile, etc. Ou bien la localisation peut être déterminée en liant la localisation estimée à la zone prédéfinie. Cette zone peut avoir un certain volume et peut être de taille limitée. La localisation peut être estimée sur la base de données cartographiques en deux dimensions (ci-après "2D") ou en 3D.

De préférence, les informations obtenues représentent à la fois le temps et la localisation.

Ainsi, le code pourrait répercuter des variations de temps et/ou de localisations associées à des entrées d'utilisateur, cela rendant la vérification encore plus simple.

En règle générale, l'utilisateur peut déclencher cette étape avant de présenter le dispositif d'affichage de son appareil mobile à un utilisateur chargé de l'authentification.

Selon encore un autre mode de réalisation particulier, les informations représentant le temps et/ou la localisation comprennent des informations chiffrées produites à l'aide d'une technique cryptographique. Comme mentionné précédemment, les informations chiffrées sont produites en transformant des informations non chiffrées représentant le temps et/ou la localisation à l'aide de la technique cryptographique. À titre d'exemple, la technique cryptographique peut comprendre une technique de chiffrement ou comporter un algorithme de hachage.

Cela rend plus difficile l'élaboration de versions contrefaites du code, et garantira l'intégrité des données non chiffrés avant la transformation en un scénario dans lequel le premier appareil mobile transmet les informations représentant le temps et/ou la localisation à un appareil mobile distinct pour générer le code.

Selon encore un autre mode de réalisation particulier, les informations représentant le temps comprennent un code temporel. Et/ou les informations représentant la localisation comprennent des informations identifiant une géolocalisation, ou des informations identifiant une balise Bluetooth ou une station de base. Cela rend le processus de rendu simple et efficace.

Selon encore un autre mode de réalisation particulier, l'entropie du code est inférieure à un seuil donné.

Une image dont l'entropie est inférieure à un seuil donné peut être facilement reconnue par un être humain car elle diffère d'une image constituée de bruit pur.

À titre d'exemple, si un modèle génératif profond est utilisé, il est possible d'entraîner le modèle génératif profond en n'utilisant par exemple que des images à faible entropie pour générer des codes ayant un faible niveau d'entropie à l'aide d'une fonction de perte mesurant une distance ou une ressemblance entre des sorties du modèle génératif profond et une ou des images préparées par l'être humain ayant un faible niveau d'entropie.

Selon encore un autre mode de réalisation particulier, le modèle de génération de code est configuré pour générer des codes différents sur la base d'informations différentes représentant des temps différents ou des localisations différentes, la valeur d'une mesure de ressemblance entre les différents codes étant inférieure à un seuil prédéfini. Comme exemples de mesure de ressemblance, on citera la corrélation croisée, l'indice de ressemblance de structure, l'indice de ressemblance de structure multi-échelle, etc.

Selon encore un autre mode de réalisation particulier, le procédé comprend en outre, avant l'étape d'affichage, une étape de combinaison du code et de l'au moins un élément qui est contenu dans le certificat numérique afin d'obtenir une image combinée. Cela permettra de faire en sorte que la vérification du certificat numérique soit facile et pratique. À titre d'exemple, le code peut être superposé à l'au moins un élément en tant qu'au moins une partie de l'arrière-plan de l'image combinée.

Selon encore un autre mode de réalisation particulier, le code présente une résolution supérieure ou égale à un seuil prédéfini. Cela permet d'assurer la visibilité du code.

Selon encore un autre mode de réalisation particulier, après l'obtention du certificat numérique, le procédé comprend en outre une étape de vérification du certificat numérique. L'étape d'affichage du code est effectuée s'il est vérifié que le certificat numérique est vrai ou valide. Sinon, si le certificat numérique s'avère être contrefait ou invalide, le procédé comprend en outre une étape d'émission d'un message d'erreur. L'étape de vérification peut en outre comprendre le fait que le premier appareil mobile communique avec un serveur distant ou vérifie une base de données locale pour vérifier le certificat numérique.

Selon encore un autre mode de réalisation particulier, le procédé comprend en outre une étape de stockage du temps et/ou de la localisation représentée par les informations obtenues, et/ou d'envoi du temps et/ou de la localisation représentée par les informations obtenues à un serveur distant à des fins de stockage. Ce mode de réalisation permet de vérifier l'historique du temps et/ou de la localisation, et peut être particulièrement utile dans des situations telles qu'un accident survenu après la consommation d'alcool.

Selon un deuxième aspect, la présente invention fournit un procédé d'authentification d'un certificat numérique. Le procédé comprend le procédé de rendu d'un code selon l'un quelconque des modes de réalisation correspondant au premier aspect, et comprend en outre les étapes suivantes mises en oeuvre par un deuxième appareil mobile :
l'obtention des informations représentant le temps et/ou la localisation, l'obtention d'un deuxième code généré à l'aide du modèle de génération de code sur la base des informations, et l'affichage du deuxième code sur un dispositif d'affichage du deuxième appareil mobile, le deuxième code étant identique au code.

En particulier, le premier appareil mobile peut être utilisé par une personne (par exemple, un client d'un bar) pour produire son certificat numérique, tandis que le deuxième appareil mobile peut être utilisé par un vérificateur (tel qu'un barman) pour vérifier le certificat numérique (par exemple, un permis de conduire) de la première personne. Ainsi, en comparant les codes affichés sur les deux appareils mobiles, le vérificateur peut facilement déterminer si le certificat numérique est authentique ou valide.

Selon un mode de réalisation particulier, le procédé comprend en outre une étape d'affichage d'une option destinée à afficher un troisième code généré à l'aide du modèle de génération de code, ou d'affichage du troisième code.

Le troisième code est généré sur la base d'informations représentant un temps adjacent au temps représenté par les informations obtenues. Le temps adjacent peut être un instant ou un intervalle qui suit ou précède immédiatement le temps représenté par les informations obtenues.

En particulier, le temps adjacent peut être antérieur au temps représenté par les informations obtenues.

Ou bien le troisième code est généré sur la base d'informations représentant un temps adjacent à un temps actuel. Le temps adjacent peut être un instant ou un intervalle qui suit ou précède immédiatement le temps actuel.

En particulier, le temps adjacent peut être antérieur au temps actuel.

Et/ou le troisième code est généré sur la base d'informations représentant une localisation adjacente à la localisation représentée par les informations obtenues ou à une localisation actuelle. La localisation adjacente peut être une localisation voisine de la localisation représentée par les informations obtenues ou de la localisation actuelle. À titre d'exemple, la localisation représentée par les informations obtenues ou la localisation actuelle peut être une zone prédéfinie, et la localisation adjacente peut être une autre zone prédéfinie qui est voisine de l'ancienne zone prédéfinie. La localisation actuelle peut être la localisation où se trouve l'appareil qui met en oeuvre cette étape.

Cette étape peut être mise en oeuvre par le premier appareil mobile, le deuxième appareil mobile ou un troisième appareil mobile.

Ce mode de réalisation permet à un vérificateur ou à un utilisateur/client de vérifier le code généré sur la base d'un instant/d'une fenêtre adjacente. Cela peut s'avérer particulièrement utile lorsqu'un autre vérificateur ne peut pas vérifier le certificat numérique de l'utilisateur/du client tant que le code affiché sur le premier appareil mobile n'a pas expiré, ce qui signifie que le deuxième ou le troisième appareil mobile, lorsqu'il est utilisé par ce vérificateur pour la vérification, n'est pas en mesure de générer le même code sur la base du temps actuel. Cette fonctionnalité peut également aider le vérificateur à contrôler plus facilement la validité du code affiché sur l'appareil mobile de l'utilisateur lorsque les données GPS provenant de l'appareil de l'utilisateur ne correspondent pas aux données GPS provenant de l'appareil du vérificateur en raison d'éventuelles inexactitudes.

Selon un troisième aspect, la présente invention fournit le premier appareil mobile. Le premier appareil mobile comprend un dispositif d'affichage, une mémoire configurée pour stocker des instructions et un processeur configuré pour exécuter les instructions afin de mettre en oeuvre le procédé selon un mode de réalisation quelconque correspondant au premier aspect, et/ou pour mettre en oeuvre l'étape correspondante selon le dernier mode de réalisation du deuxième aspect.

En particulier, lorsque le processeur est configuré pour exécuter les instructions de mise en oeuvre d'une étape d'affichage décrite selon le premier aspect, le processeur commande le dispositif d'affichage pour mettre en oeuvre l'étape d'affichage correspondante.

Selon un quatrième aspect, la présente invention fournit un système d'authentification d'un certificat numérique qui comprend le premier appareil mobile et le deuxième appareil mobile. Le deuxième appareil mobile comprend un dispositif d'affichage, une mémoire configurée pour stocker des instructions, et un processeur configuré pour exécuter les instructions afin de mettre en oeuvre les étapes correspondantes selon l'un quelconque des modes de réalisation du deuxième aspect.

Le système peut en outre comprendre le troisième appareil mobile, qui comprend un dispositif d'affichage, une mémoire configurée pour stocker des instructions, et un processeur configuré pour exécuter les instructions afin de mettre en oeuvre l'étape correspondante selon le dernier mode de réalisation du deuxième aspect.

En particulier, lorsque le processeur du deuxième ou troisième appareil mobile est configuré pour exécuter les instructions afin de mettre en oeuvre l'une quelconque des étapes d'affichage décrites selon le deuxième aspect, le processeur commande son dispositif d'affichage pour mettre en oeuvre l'étape d'affichage correspondante.

Les étapes des procédés du premier ou deuxième aspect peuvent être déterminées par des instructions de programme d'ordinateur. Par conséquent, selon un cinquième aspect, la présente invention fournit un programme d'ordinateur comprenant des instructions qui, lorsqu'elles sont exécutées par un appareil mobile, amènent l'appareil mobile à mettre en oeuvre le procédé selon l'un quelconque des modes de réalisation correspondant au premier aspect.

Il convient de noter que cela ne signifie pas nécessairement que les instructions doivent explicitement spécifier l'une des étapes d'obtention d'informations représentant un temps et/ou une localisation. Au lieu de cela, l'étape d'obtention peut par exemple être répercutée dans un paramètre utilisé dans les instructions.

Dans un mode de réalisation particulier, le programme d'ordinateur comprend en outre des instructions qui, lorsqu'elles sont exécutées par un autre appareil mobile, amènent l'autre appareil mobile à mettre en oeuvre les étapes de :
obtention des informations représentant le temps et/ou la localisation, obtention d'un deuxième code généré à l'aide du modèle de génération de code sur la base des informations, et affichage du deuxième code sur un dispositif d'affichage de l'autre appareil mobile, le deuxième code étant identique au code.

Le programme d'ordinateur peut en outre comprendre des instructions qui, lorsqu'elles sont exécutées par un appareil mobile, amènent cet appareil mobile à afficher un troisième code, ou bien à afficher un troisième code, le troisième code étant généré à l'aide du modèle de génération de code sur la base d'informations représentant un temps adjacent au temps représenté par les informations obtenues ou à un temps actuel. L'appareil mobile peut être l'un des deux appareils mobiles décrits ci-dessus ou un autre appareil mobile.

Ce programme peut utiliser un langage de programmation quelconque et prendre la forme d'un code source, d'un code objet ou d'un code intermédiaire entre le code source et le code objet, tel qu'une forme partiellement compilée, ou toute autre forme souhaitable.

Selon un sixième aspect, la présente invention fournit un ou plusieurs supports d'information stockant le programme d'ordinateur selon l'un quelconque des modes de réalisation du cinquième aspect. En particulier, le ou les supports d'information peuvent être non transitoires.

Le ou les supports d'information peuvent être une entité ou un dispositif quelconque capable de stocker le programme. À titre d'exemple, le ou les supports d'informations peuvent comprendre des supports de stockage tels qu'une ROM, comme par exemple un CD-ROM ou une ROM à microcircuit électronique, ou des supports de stockage magnétiques, comme par exemple une disquette (disque souple) ou un disque dur.

En variante, le ou les supports d'informations peuvent comprendre un circuit intégré dans lequel le programme est incorporé, le circuit étant conçu pour exécuter le procédé en question ou pour être utilisé lors de son exécution.

### BRÈVE DESCRIPTION DES DESSINS

Des modes de réalisation de l'invention et leurs avantages seront décrits en détail ci-après en référence aux dessins schématiques annexés présentés ci-après.
La **figure 1** illustre un exemple de système selon un ou plusieurs modes de réalisation décrits ici.
La **figure 2** est un organigramme illustrant un procédé de rendu d'un code conformément à un exemple donné ici.
La **figure 3** représente un organigramme plus précis de l'exemple de la figure 2.
La **figure 4** représente un organigramme plus précis de l'exemple de la figure 2.
La **figure 5** est un organigramme illustrant un procédé d'authentification d'un certificat numérique conformément à un autre exemple.
La **figure 6** est un schéma fonctionnel illustrant un premier appareil mobile conformément à un autre exemple.
La **figure 7** est un schéma fonctionnel illustrant un deuxième appareil mobile conformément à un autre exemple.

Pour des raisons de simplicité et de clarté des illustrations, des références numériques identiques seront utilisées dans toutes les figures pour faire référence à des parties identiques ou similaires, sauf indication contraire.

### DESCRIPTION DE MODES DE REALISATION PARTICULIERS

Nous allons maintenant décrire un procédé et un appareil mobile de rendu de code, un procédé et un système d'authentification de certificat numérique, qui, globalement, ajoutent un niveau de sécurité à l'authentification d'un certificat numérique.

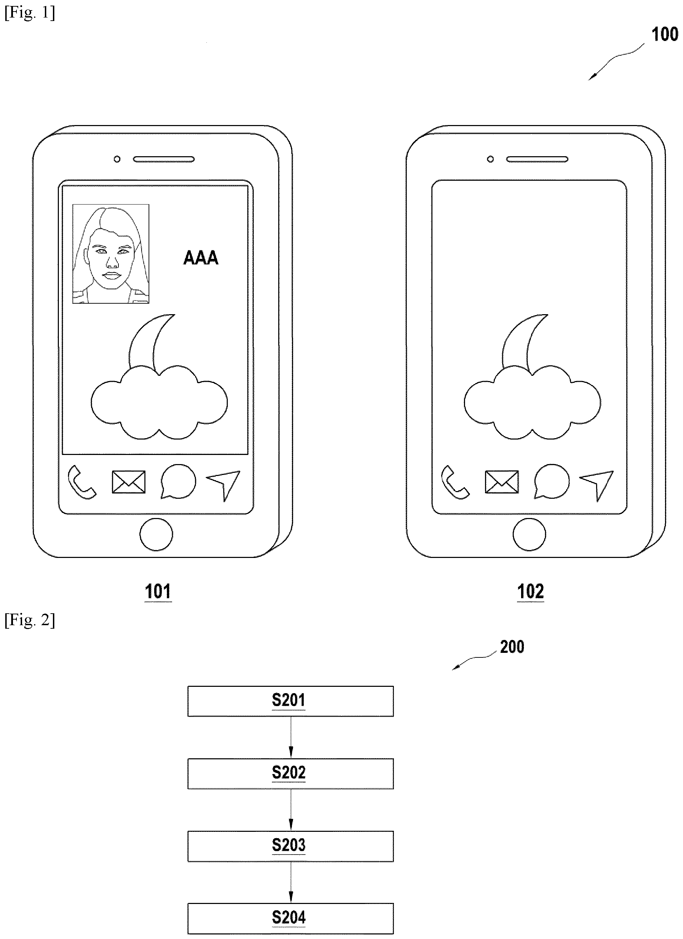

La **figure 1** illustre un exemple de système 100 dans lequel différents modes de réalisation de la présente invention peuvent être utilisés. Comme illustré sur la **figure 1****,** le système 100 comprend un premier appareil mobile 101 et un deuxième appareil mobile 102. Bien qu'il soit illustré sous la forme d'un téléphone intelligent sur la **figure 1****,** des exemples du premier appareil mobile 101 et du deuxième appareil mobile 102 comprennent en outre une tablette, un dispositif vestimentaire, etc.

À titre d'exemple, le premier appareil mobile 101 et le deuxième appareil mobile 102 peuvent être configurés pour communiquer avec un serveur distant (non représenté).

Dans l'exemple illustré sur la **figure 1****,** alors qu'il est utilisé par un utilisateur pour produire son certificat numérique, le premier appareil mobile 101 affiche le certificat numérique en association avec un code graphique. À titre d'exemple, le certificat numérique peut être un permis de conduire, une carte d'identité, etc. Le certificat numérique est ici présenté avec une image d'un visage et un texte annexé (par exemple, des informations personnelles).

Le code graphique est superposé à l'image, ici dans une partie vierge du certificat numérique, sous la forme d'un nuage et d'un croissant. À titre d'exemple, le code graphique peut être utilisé comme arrière-plan du certificat numérique, de manière à ne pas gêner la lecture du document.

Comme cela sera décrit ci-après, l'utilisateur peut utiliser une application pour afficher le certificat numérique en association avec un code obtenu.

Par ailleurs, le deuxième appareil mobile 102 est utilisé par un certificateur qui souhaite authentifier visuellement le certificat numérique et affiche le même code graphique (en utilisant par exemple la même application). En comparant les codes graphiques affichés sur les deux appareils mobiles 101 et 102 et en constatant qu'ils sont identiques l'un à l'autre parce que les deux appareils se trouvent dans la même fenêtre temporelle et au même endroit (limite géographique), le certificateur est en mesure de confirmer que le certificat numérique est authentique ou valide. La description présentée ci-après décrit en détail la manière dont cela est mis en oeuvre.

Sur la **figure 1****,** l'appareil mobile 102 ne présente que le code graphique, ce qui revient à utiliser un mode de vérification. Il est également possible que le vérificateur choisisse d'afficher le code graphique dans un mode utilisateur dans lequel l'appareil mobile 102 affiche le code graphique en association avec le certificat numérique du vérificateur, bien que dans ce cas, le vérificateur ne prendra en compte que le code graphique accompagnant le certificat et non le certificat.

La **figure 2** illustre un procédé 200 de rendu d'un code. Le procédé peut être mis en oeuvre par l'appareil mobile 101 décrit en référence à la figure 1 et comprend les étapes S201-S204 suivantes.

Lors de l'étape S201, l'appareil mobile 101 obtient un certificat numérique tel qu'un document d'identité numérique.

Le document d'identité numérique peut être un permis de conduire, un passeport, une carte d'identité, une carte de séjour, etc.

À titre d'exemple, lors de l'étape S201, le certificat numérique peut être reçu d'un utilisateur ou être récupéré dans la base de données d'un serveur d'une autorité. L'étape S201 peut être déclenchée par une entrée utilisateur.

En particulier, si le certificat numérique est reçu d'un utilisateur, il peut être authentifié ou validé de manière supplémentaire par le premier dispositif mobile 101 qui communique avec un serveur distant ou vérifie une base de données locale. Si le certificat numérique est considéré comme faux ou invalide (par exemple, s'il n'est pas trouvé dans la base de données distante ou locale), le premier dispositif mobile 101 peut rejeter le certificat numérique sans exécuter les étapes restantes du procédé et peut émettre un message d'erreur.

Lors de l'étape S202, l'appareil mobile 101 obtient des informations représentant un temps et/ou une localisation.

À titre d'exemple, les informations représentant le temps comprennent un code temporel. Et/ou les informations représentant la localisation comprennent des informations identifiant une géolocalisation, telles que des coordonnées GPS, ou des informations identifiant une balise Bluetooth ou une station de base.

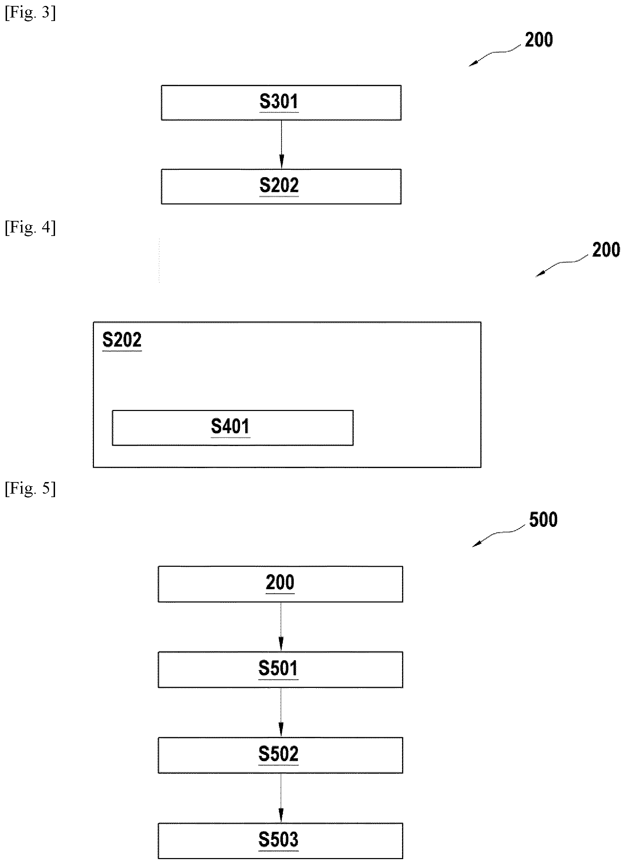

En outre ou en variante, les informations représentant le temps sont obtenues en déterminant tout d'abord une période comprenant un instant initial (par exemple, un instant associé à une entrée utilisateur comme décrit ci-dessous en référence à la **figure 3****)** selon une règle prédéfinie, puis en déterminant un instant de référence au cours de la période en tant qu'informations représentant le temps.

À titre d'exemple, lors de la détection de l'entrée utilisateur, l'appareil mobile 101 peut déterminer le temps (par exemple, 8h15 le 25 mai 2023) lors duquel l'entrée utilisateur est détectée, rechercher une période (par exemple entre 8h et 10h le 25 mai 2023) comprenant l'instant lors duquel l'entrée utilisateur est détectée dans un horaire donné, puis utiliser le temps de début de la période (8h le 25 mai 2023) en tant qu'informations représentant le temps.

Dans un autre exemple compatible avec l'un quelconque des autres exemples présentés ici, le modèle de génération de code est un modèle génératif profond.

Lors de l'étape S203, l'appareil mobile 101 obtient un premier code généré à l'aide d'un modèle de génération de code sur la base des informations représentant le temps et/ou la localisation.

En particulier, lors de l'étape S203, l'appareil mobile peut générer le premier code localement, ou le recevoir du serveur distant après avoir transmis au serveur les informations représentant le temps et/ou la localisation.

De plus, pour générer le premier code, les informations représentant le temps et/ou la localisation peuvent être utilisées en tant que données d'entrée du modèle de génération de code.

En variante ou en outre, le modèle de génération de code peut être paramétré au moyen des informations représentant le temps et/ou la localisation pour générer le premier code.

Lors de l'étape S204, l'appareil mobile 101 affiche le premier code en association avec au moins un élément qui est contenu dans le certificat numérique sur un dispositif d'affichage du premier appareil mobile.

À titre d'exemple, comme illustré sur la **figure 1****,** le premier code peut être un code graphique apposé sur le certificat numérique pour obtenir une image combinée avant l'étape S204. Le premier code peut constituer l'arrière-plan de l'image combinée ou apparaître à une certaine position au sein de l'image combinée. Par conséquent, lors de l'étape S204, l'appareil mobile 101 affiche l'image combinée.

Étant donné que le premier code est généré à l'aide d'un modèle de génération de code sur la base des informations représentant un temps et/ou une localisation, l'apparence/le contenu du premier code varie en fonction du temps et/ou des localisations différentes et pourrait être imprévisible (en particulier, le modèle est configuré pour fournir en sortie des codes différents pour des localisations et/ou temps différents). Par conséquent, la vérification du certificat numérique à l'aide du premier code est simple, efficace et plus sûre que le procédé de l'art antérieur.

Comme illustré sur la **figure 3****,** dans un exemple compatible avec l'un quelconque des autres exemples présentés ici, le procédé comprend en outre une étape S301 de réception d'une entrée utilisateur permettant d'effectuer le rendu d'un code avant l'étape S202. L'entrée utilisateur peut déclencher l'étape S202. Par conséquent, le temps et/ou la localisation représentés par les informations obtenues lors de l'étape S202 peuvent être associés à l'entrée utilisateur.

À titre d'exemple, le temps peut être l'instant où l'entrée utilisateur est détectée et/ou la localisation peut être la localisation où se trouve le premier appareil mobile 101 lorsque l'entrée utilisateur est détectée. Comme mentionné ci-dessus, le procédé peut être mis en oeuvre par le biais d'une application d'un appareil mobile. Cette application dispose d'une interface permettant ce déclenchement.

Comme illustré sur la **figure 4****,** dans un autre exemple compatible avec l'un quelconque des autres exemples présentés ici, l'étape S202 comprend une étape S401 de transformation d'informations non chiffrées représentant le temps et/ou la localisation au moyen d'une technique cryptographique. Les informations non chiffrées peuvent être les informations décrites ci-dessus. La technique cryptographique peut être un algorithme de hachage tel que l'algorithme de hachage sécurisé-256, le message digest 5, etc. En particulier, l'étape S401 peut être exécutée afin de transmettre les informations transformées au serveur.

Dans un autre exemple compatible avec l'un quelconque des autres exemples présentés ici, l'entropie du premier code est inférieure à un seuil donné afin de faire en sorte que le premier code puisse être facilement validé par un oeil humain.

La **figure 5** illustre un procédé 500 d'authentification d'un certificat numérique. Le procédé comprend les étapes du procédé 200 selon l'un quelconque des exemples décrits ci-dessus, et comprend en outre les étapes suivantes S501-S503, qui sont mises en oeuvre par le deuxième appareil mobile 102.

L'appareil mobile 102 obtient les informations représentant le temps et/ou la localisation décrites ci-dessus lors de l'étape S501, obtient un deuxième code généré à l'aide du modèle de génération de code sur la base des informations lors de l'étape S502, et affiche le deuxième code sur un dispositif d'affichage du deuxième appareil mobile 102 lors de l'étape S503. Le deuxième code est identique au premier code décrit ci-dessus.

De ce fait, en comparant le deuxième code affiché sur le deuxième appareil mobile 102 au premier code, le vérificateur humain est en mesure de valider visuellement le certificat numérique, car le certificat numérique n'est valide que si le code affiché sur le premier appareil mobile 101 est identique au code affiché sur le deuxième appareil mobile 102.

Dans un exemple particulier, après l'étape S501, l'appareil mobile 102 affiche une option (non représentée) destinée à afficher un troisième code généré à l'aide du modèle de génération de code sur la base d'informations représentant un temps adjacent antérieur au temps représenté par les informations obtenues lors de l'étape S501. Dans cet exemple particulier, cette option est affichée en même temps que le deuxième code. À titre d'exemple, il peut s'agir d'un bouton affiché sous le deuxième code. Lorsqu'il reçoit une entrée utilisateur pour sélectionner l'option, le deuxième appareil mobile 102 affiche le troisième code.

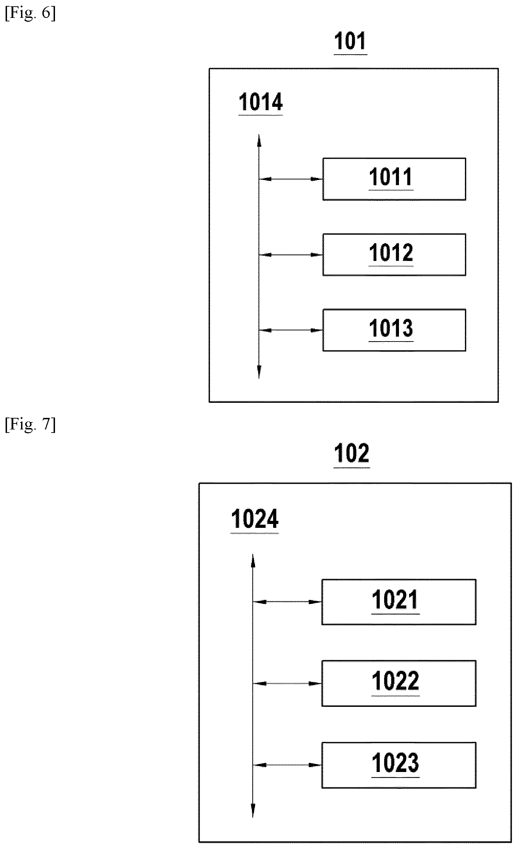

La **figure 6** illustre le premier appareil mobile 101, qui comprend un dispositif d'affichage 1011, une mémoire 1012 et un processeur 1013. La mémoire 1012 est configurée pour stocker des instructions, et le processeur 1013 est configuré pour exécuter les instructions afin de mettre en oeuvre le procédé 200 selon l'un quelconque des exemples le concernant.

La **figure 7** illustre le deuxième appareil mobile 102, qui comprend un dispositif d'affichage 1021, une mémoire 1022 et un processeur 1023. La mémoire 1022 est configurée pour stocker des instructions, et le processeur 1023 est configuré pour exécuter les instructions afin de mettre en oeuvre le procédé 500 selon l'un quelconque des exemples le concernant.

Dans un exemple compatible avec l'un quelconque des autres exemples présentés ici, le premier appareil mobile 101 ou le deuxième appareil mobile 102 comprend en outre un composant d'entrée utilisateur configuré pour recevoir l'entrée utilisateur. Comme exemples de ce composant, on citera un écran tactile, un clavier, un système de réponse vocale, une caméra, un microphone ou tout autre dispositif permettant de détecter une entrée provenant d'un utilisateur.

En particulier, le processeur 1011 ou 1012 comprend une unité centrale de traitement (ci-après "CPU"), une unité de traitement de la vision (ci-après "VPU"), une unité de traitement graphique (ci-après "GPU"), une unité de traitement tensoriel (ci-après "TPU"), une unité de traitement neuronal (ci-après "NPU"), un moteur de traitement neuronal, un coeur d'une CPU, d'une VPU, d'une GPU, d'une TPU, d'une NPU ou d'un autre dispositif de traitement, un processeur d'application, un contrôleur d'affichage, un circuit intégré spécifique d'application (ci-après "ASIC"), une matrice de portes programmables par l'utilisateur (ci-après "FPGA"), un coprocesseur, ou tout autre matériel configuré pour fonctionner en tant qu'unité de traitement.

La mémoire 1012 ou 1022 peut comprendre tout support disponible accessible par l'appareil mobile 101 ou 102 sous forme de mémoire volatile ou non volatile. La mémoire 1012 ou 1022 peut être une mémoire vive (ci-après "RAM"), une mémoire vive dynamique (ci-après "DRAM"), une mémoire vive statique (ci-après "SRAM"), une autre forme de mémoire volatile connue de la technique, un disque dur magnétique, un disque optique, un disque souple, une mémoire flash, une mémoire programmable électriquement (ci-après "EPROM"), une mémoire effaçable et programmable électriquement (ci-après "EEPROM"), toute autre forme de mémoire non volatile connue de la technique, un serveur de données, etc.

Le premier appareil mobile 101 ou le deuxième appareil mobile 102 peut en outre comprendre un composant de communication configuré pour communiquer avec des dispositifs externes par l'intermédiaire d'un ou de plusieurs réseaux câblés ou sans fil en émettant ou en recevant des signaux de réseau par l'intermédiaire d'un ou de plusieurs réseaux. Comme exemples de composants de communication, on citera une carte d'interface réseau telle qu'une carte Ethernet, un émetteur-récepteur optique, un émetteur-récepteur radiofréquence, un contrôleur de bus série universel, ou tout autre dispositif capable d'envoyer ou de recevoir des informations.

Comme le montrent les **figure 6** et 7, différents composants de l'appareil mobile 101 ou 102 peuvent être couplés directement ou indirectement les uns aux autres physiquement, par voie de communication, ou fonctionnellement par l'intermédiaire d'un canal de communication 1014 ou 1024. Le canal de communication peut comprendre une connexion réseau ou tout autre moyen de communication de données.

La présente invention a été décrite conformément à des modes de réalisation particuliers, mais il est clair qu'elle est susceptible de donner lieu à de nombreuses modifications et modes de réalisation entrant dans le cadre de l'invention définie par les revendications annexées.

## Revendications

1. Procédé (200) de rendu d'un code mis en oeuvre par un premier appareil mobile (101), **caractérisé en ce qu'**il comprend :
l'obtention (S201) d'un certificat numérique ;
l'obtention (S202) d'informations représentant un temps et/ou une localisation ;
l'obtention (S203) d'un code généré à l'aide d'un modèle de génération de code sur la base des informations représentant le temps et/ou la localisation ; et
l'affichage (S204) du code en association avec au moins un élément qui est contenu dans le certificat numérique sur un dispositif d'affichage du premier appareil mobile,
le modèle de génération de code étant un modèle génératif profond dont l'entropie est inférieure à un seuil donné, et le code étant un code graphique affiché comme arrière-plan du certificat numérique.

2. Procédé selon la revendication 1, dans lequel la génération du code comprend :
la fourniture en entrée des informations représentant le temps et/ou la localisation au modèle de génération de code.

3. Procédé selon la revendication 1 ou 2, dans lequel la génération du code comprend le paramétrage du modèle de génération de code à l'aide des informations représentant le temps et/ou la localisation.

4. Procédé selon l'une quelconque des revendications 1 à 3, comprenant en outre, avant l'obtention (S202) des informations représentant le temps et/ou la localisation :
la réception (S301) d'une entrée utilisateur pour effectuer le rendu d'un code, dans lequel
la localisation représentée par les informations obtenues est : une localisation estimée associée à l'entrée utilisateur, une zone prédéfinie comprenant la localisation estimée, ou une localisation de référence dans la zone prédéfinie ; et/ou
le temps représenté par les informations obtenues est : un instant associé à l'entrée utilisateur, une période comprenant l'instant associé à l'entrée utilisateur, ou un instant de référence au cours de la période.

5. Procédé selon l'une quelconque des revendications 1 à 4, dans lequel les informations représentant le temps et/ou la localisation comprennent des informations chiffrées produites (S401) à l'aide d'une technique cryptographique.

6. Procédé selon la revendication 5, dans lequel les informations chiffrées comprennent une valeur de hachage correspondant au temps et à la localisation.

7. Procédé selon l'une quelconque des revendications 1 à 6, dans lequel les informations représentant le temps comprennent un code temporel ; et/ou les informations représentant la localisation comprennent des informations identifiant une géolocalisation, ou des informations identifiant une balise Bluetooth ou une station de base.

8. Procédé selon l'une quelconque des revendications 1 à 7, comprenant en outre, avant l'étape d'affichage :
la combinaison du code et de l'au moins un élément qui est contenu dans le certificat numérique afin d'obtenir une image combinée.

9. Procédé (500) d'authentification d'un certificat numérique, comprenant le procédé (200) selon l'une quelconque des revendications 1 à 8, et comprenant en outre les étapes suivantes mises en oeuvre par un deuxième appareil mobile (102) :
l'obtention (S501) des informations représentant le temps et/ou la localisation, l'obtention (S502) d'un deuxième code généré à l'aide du modèle de génération de code sur la base des informations, et l'affichage (S503) du deuxième code sur un dispositif d'affichage du deuxième appareil mobile, le deuxième code étant identique au code.

10. Procédé selon la revendication 9, comprenant en outre :
l'affichage d'une option destinée à afficher un troisième code, ou l'affichage d'un troisième code,
dans lequel le troisième code est généré à l'aide du modèle sur la base d'informations qui représentent un temps adjacent et/ou une localisation adjacente, le temps adjacent étant un temps adjacent au temps représenté par les informations obtenues (S501) ou adjacent à un temps actuel, la localisation adjacente étant une localisation adjacente à la localisation représentée par les informations obtenues (S501) ou adjacent à une localisation actuelle.

11. Appareil mobile (101) permettant d'effectuer le rendu d'un code, comprenant :
un dispositif d'affichage (1011) ;
une mémoire (1012) configurée pour stocker des instructions ; et
un processeur (1013) configuré pour exécuter les instructions afin de mettre en oeuvre le procédé (200) selon l'une quelconque des revendications 1 à 8.

12. Système (100) d'authentification d'un certificat numérique, comprenant l'appareil mobile (101) selon la revendication 11, et un autre appareil mobile (102) comprenant :
un dispositif d'affichage (1021) ;
une mémoire (1022) configurée pour stocker des instructions ; et
un processeur (1023) configuré pour exécuter les instructions afin de mettre en oeuvre les étapes de :
obtention (S501) des informations représentant le temps et/ou la localisation,
obtention (S502) d'un deuxième code généré à l'aide du modèle de génération de code sur la base des informations, et commande du dispositif d'affichage (1021) pour afficher (S503) le deuxième code sur un dispositif d'affichage de l'autre appareil mobile, le deuxième code étant identique au code.

13. Programme d'ordinateur, comprenant des instructions qui, lorsqu'elles sont exécutées par un appareil mobile, amènent l'appareil mobile à mettre en oeuvre le procédé selon l'une quelconque des revendications 1 à 8.
